# FASCICULE DE BREVET EUROPEEN

(11) **EP 4 005 044 B1**
(45) Date de publication et mention de la délivrance du brevet: **04.11.2026**
(21) Numéro de dépôt: 20743692.4
(22) Date de dépôt: 21.07.2020
(51) Int. Cl.: H02G 3/12, H02G 3/10

(54) **DISPOSITIF DE MONTAGE D'UN BOÎTIER D'UN BLOC MULTI-APPAREILLAGE DANS UNE OUVERTURE D'UNE PAROI DE RÉCEPTION ET BLOC MULTI-APPAREILLAGE COMPRENANT UN BOÎTIER MUNI À CHAQUE EXTRÉMITÉ D'UN TEL DISPOSITIF DE MONTAGE**
VORRICHTUNG ZUR MONTAGE EINES GEHÄUSES EINES BLOCKS MIT MEHREREN APPARATEN IN DIE ÖFFUNG EINER MONTAGEWAND UND BLOCK MIT MEHREREN APPARATEN UMFASSEND EIN GHÄUSE WELCHS AN SEINEN ENDEN MIT EINER SOLCHEN MONTAGEVORRICHTUNG VERSEHEN IST
DEVICE FOR MOUNTING A BOX OF A MULTI-APPARATUS BLOCK IN AN OPENING OF A RECEIVING WALL AND MULTI-APPARATUS BLOCK COMPRISING A BOX PROVIDED AT EACH END WITH SUCH A MOUNTING DEVICE

(30) Priorité: 26.07.2019 FR 1908498
(43) Date de publication de la demande: 01.06.2022
(73) Titulaire: Legrand France, 87000 Limoges (FR); Legrand SNC, 87000 Limoges (FR)
(72) Inventeur: COUTANT, Régis, 72140 Mont-Saint-Jean (FR)
(74) Mandataire: Jacobacci & Partners France
(86) Numéro de dépôt international: PCT/EP2020/070586
(87) Numéro de publication internationale: WO 2021/018674

(56) Documents cités:
- US-A- 4 087 624
- US-A- 5 400 988
- US-A1- 2013 036 703

## Description

La présente invention concerne, de manière générale, le montage de blocs multi-appareillage dans des ouvertures de diverses parois de réception comme des parois de mobiliers, des cloisons creuses ou alvéolaires.

Pour réaliser un tel montage, on connaît déjà des embouts pourvus de vis de griffe associés aux extrémités du boîtier d'un bloc multi-appareillage.

Dans ce cas, les têtes des vis de griffe émergent à l'avant des embouts de manière à être accessibles à un installateur par la face avant du bloc multi-appareillage lorsque celui-ci est engagé dans une ouverture d'une paroi de réception et repose sur le bord de cette ouverture par l'intermédiaire d'un trottoir périphérique.

Une fois que le bloc multi-appareillage muni de ses embouts est introduit dans ladite ouverture de montage, l'installateur peut verrouiller ledit bloc multi- appareillages en vissant chaque vis de griffe à l'aide d'un outil de façon à faire remonter chaque griffe de chaque vis de griffe le long du corps fileté de la vis jusqu'à ce qu'elle vienne en butée contre la face arrière de la paroi de réception.

Cette opération de verrouillage est longue et fastidieuse car il faut visser chaque vis de griffe l'une après l'autre. En outre, lors du conditionnement, du transport et de la manipulation d'un tel bloc multi-appareillage muni de ses embouts de montage à vis de griffe, il y a un risque qu'une ou plusieurs de ses griffes de verrouillage se dévissent et se perdent ce qui rend inutilisable ledit bloc.

Enfin on connaît du document US5400988, un dispositif de montage d'un panneau électrique dans une ouverture d'une paroi de réception. Ce dispositif de montage comporte le long de deux faces internes de deux flancs latéraux parallèles, deux lames de verrouillage, chaque lame de verrouillage étant adaptée à glisser le long dudit flanc latéral correspondant, depuis une position rétractée vers une position d'extension, au travers d'une fenêtre correspondante, sous l'action d'un ressort de compression. Selon ce document, il est prévu une première dent liée à chaque lame de verrouillage adaptée à s'accrocher au bord d'une ouverture prévue dans une paroi longitudinale arrière liée au flanc latéral correspondant pour retenir la lame de verrouillage en position rétractée et une deuxième dent liée à chaque lame de verrouillage adaptée à s'accrocher sur le même bord de ladite ouverture pour maintenir la lame de verrouillage en position d'extension.

Afin de remédier aux inconvénients de l'état de la technique précité, la présente invention propose un nouveau dispositif de montage d'un bloc multi-appareillage dans une ouverture d'une paroi de réception qui permet un verrouillage automatique, sans vissage, dudit bloc dans ladite ouverture.

Plus particulièrement, elle propose un dispositif de montage selon la revendication 1.

D'autres caractéristiques non limitatives et avantageuses du dispositif de montage conforme à l'invention, prises individuellement ou selon toutes les combinaisons techniquement possibles, sont énoncées dans les revendications 2 à 8.

L'invention concerne également un bloc multi-appareillage comprenant un boîtier de forme parallélépipédique rectangle avec deux parois longitudinales parallèles, et deux dispositifs de montage selon l'invention équipant les deux extrémités du boîtier, l'embout de chaque dispositif de montage étant fixé sur ledit boîtier de sorte que les deux flancs latéraux dudit embout recouvrent une partie des faces externes des parois longitudinales dudit boîtier et le flanc d'extrémité dudit embout ferme une partie d'une ouverture d'extrémité dudit boîtier, les faces externes desdites parois longitudinales du boîtier comportant des rainures longitudinales externes dans lesquelles sont glissées les deux lames de verrouillage de chaque dispositif de montage.

Selon une caractéristique préférentielle du bloc multi-appareillage conforme à l'invention, le boîtier comporte deux parois latérales d'extrémité rapportées sur les flancs d'extrémité des embouts desdits dispositifs de montage pour fermer entièrement les deux ouvertures d'extrémité dudit boîtier.

Avantageusement, chaque paroi latérale d'extrémité du boîtier est glissée sur des bords de glissement correspondants du flanc d'extrémité de l'embout du dispositif de montage correspondant.

Avantageusement également, chaque paroi latérale d'extrémité du boîtier est encliquetée dans une ouverture prévue dans le flanc d'extrémité de l'embout du dispositif de montage correspondant.

La description qui va suivre en regard des dessins annexés, donnés à titre d'exemples non limitatifs, fera bien comprendre en quoi consiste l'invention et comment elle peut être réalisée.

Sur les dessins annexés :
[fig. 1] est une vue schématique partielle en perspective éclatée d'un mode de réalisation préférentiel d'un bloc multi-appareillage selon l'invention,
[fig. 2] est une vue schématique complète en perspective assemblée du bloc multi-appareillage de la figure 1,
[fig. 3] est une vue schématique en perspective avant du boîtier, ouvert à ses deux extrémités, du bloc multi-appareillage de la figure 1,
[fig. 4] est une vue schématique d'une extrémité du boîtier de la figure 3,
[Fig. 5] est une vue schématique en perspective arrière du boîtier de la figure 3,
[fig. 6] est une vue schématique en perspective de l'extérieur d'un dispositif de montage selon l'invention qui équipe le boîtier du bloc multi-appareillage de la figure 2,
[fig. 7] est une vue schématique en perspective de l'intérieur du dispositif de montage de la figure 6,
[fig. 8] est une vue schématique en perspective d'un côté d'une lame de verrouillage du dispositif de montage de la figure 7,
[Fig. 9] est une vue schématique en perspective d'un autre coté opposé de la lame de verrouillage de la figure 8,
[fig. 10] est une vue schématique de côté du bloc multi-appareillage de la figure 2 en phase d'approche pour son montage dans une ouverture d'une paroi de réception ;
[fig. 11] est une vue en coupe longitudinale, prise au niveau d'une lame de verrouillage de chaque dispositif de montage, de la figure 10 ;
[fig. 12] est une vue en coupe similaire à celle de la figure 11, du bloc multi-appareillage de la figure 2 engagé mais non encore verrouillé dans l'ouverture de la paroi de réception, et
[fig.13] est une vue en coupe longitudinale, prise au niveau d'une lame de verrouillage de chaque dispositif de montage, dans un autre plan parallèle au plan de coupe de la figure 11, du bloc multi-appareillage de la figure 2 engagé et verrouillé dans l'ouverture de la paroi de réception.

Dans la description qui va suivre, par convention, le terme « avant » désignera le côté d'un élément décrit orienté vers un utilisateur lorsque cet élément est en position d'utilisation sur une paroi, tandis que le terme « arrière » désignera le côté opposé de cet élément, tourné vers l'intérieur de la paroi.

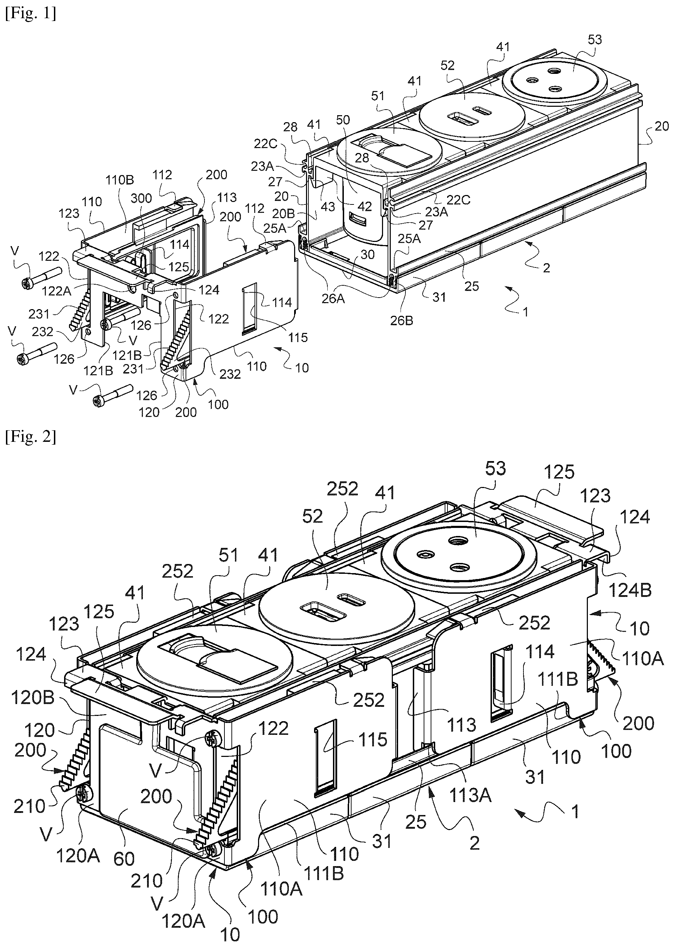

Sur la figure 2, on a représenté un mode de réalisation préférentiel d'un bloc multi-appareillage 1 conforme à la présente invention.

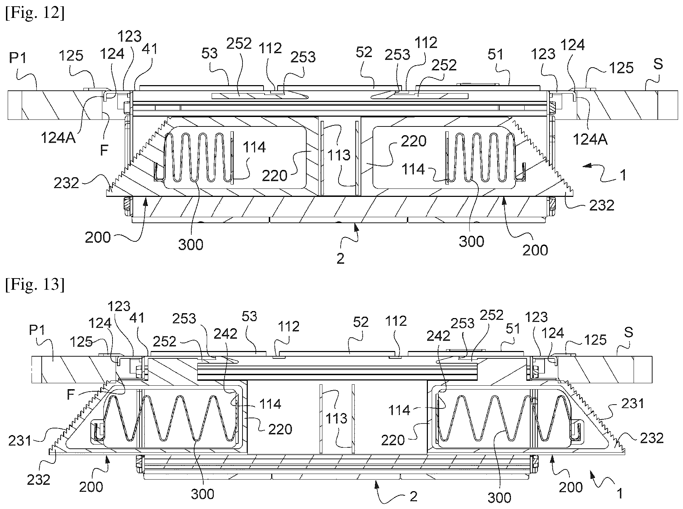

Le bloc multi-appareillage 1 comprend un boîtier 2 de forme parallélépipédique rectangle et deux dispositifs de montage 10 selon l'invention qui équipent les deux extrémités du boîtier 2, pour son montage aisé dans une ouverture F d'une paroi de réception P1 quelconque (voir figure 13).

Avantageusement, mais non exclusivement, un tel bloc multi-appareillage 1 est destiné à être monté dans l'ouverture d'une paroi d'un mobilier de bureau comme une table de travail ou un comptoir de réception ou encore un quelconque meuble de rangement.

Le boîtier 2, plus particulièrement représenté sur les figures 1, 3, 4 et 5, comporte deux parois longitudinales 20 parallèles, maintenues à une distance fixe déterminée l'une de l'autre par au moins un capot 30 monté sur des aménagements d'une partie arrière 26 formant le pied desdites parois longitudinales 20.

Ici, il est prévu trois capots 30 montés côte à côte de manière jointive. Les trois capots 30 forment ensemble la paroi arrière (appelée encore paroi de fond) dudit boîtier 2.

Chaque paroi longitudinale 20 est formée d'une seule pièce en matière plastique moulée chargée ou non en fibres de verre ou en matière métallique légère comme l'aluminium.

Chaque capot 30 est également formé d'une seule pièce en matière plastique moulée chargée ou non en fibres de verre ou en matière métallique légère comme l'aluminium. Il comporte une paroi de fermeture bordée, le long de ses deux bords longitudinaux parallèles, par deux retours 31 parallèles qui s'entendent perpendiculairement à ladite paroi de fermeture.

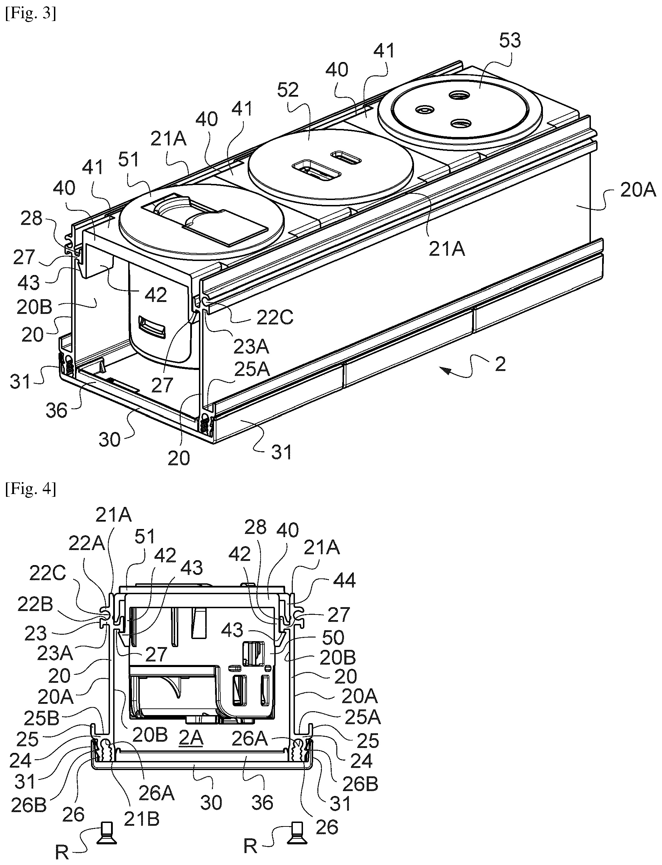

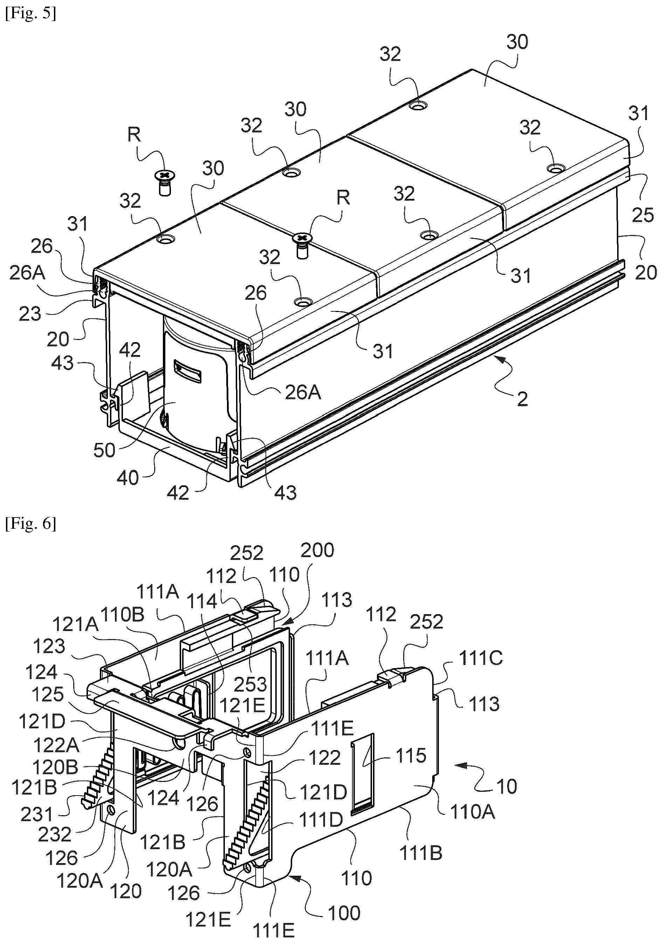

Pour le montage des capots 30 sur les parois longitudinales 20, comme le montre plus particulièrement la figure 4, la partie arrière 26 de chacune desdites parois longitudinales 20, qui s'étend à partir du bord arrière 21B libre de chaque paroi longitudinale 20 sur une petite partie de sa hauteur, forme une première gorge 26A au fond arrondi, ouverte vers l'arrière, qui court le long de la face externe 20A de la paroi longitudinale 20, sur toute la longueur de ladite paroi longitudinale 20. Les faces internes en regard de chaque première gorge 26A sont rainurées et il est prévu en saillie sur la face externe de la partie arrière 26 de chaque paroi longitudinale 20, un cran 26B qui court également sur toute la longueur de ladite paroi longitudinale 20. En correspondance, comme le montre la figure 5, la paroi de fermeture de chaque capot 30 est percée de deux orifices 32 placés respectivement le long des deux bords longitudinaux parallèles de ladite paroi de fermeture.

Comme le montrent les figures 3 à 5, chaque capot 30 est encliqueté sur lesdites parois longitudinales 20 de sorte que sa paroi de fermeture ferme localement l'ouverture longitudinale arrière du boîtier 2, en s'étendant en largeur d'une paroi longitudinale 20 à l'autre, et que ses retours 31 recouvrent les faces externes des parties arrières 26 desdites parois longitudinales 20 en s'accrochant sur les crans 26B. Dans cette position de montage, les orifices 32 de chaque capot 30 débouchent dans les premières gorges 26A desdites parois longitudinales 20 et des vis ou des rivets filetés R peuvent être vissés au travers de ces orifices 32 dans lesdites gorges 26A rainurées pour renforcer, si nécessaire, la solidarisation de chaque capot 30 auxdites parois longitudinales 20.

Afin de renforcer, l'assemblage des parois longitudinales 20 et des capots 30, à chaque extrémité du boîtier 2, une pièce de renfort 36 s'étend sur la face interne de la paroi arrière dudit boîtier 2 de telle manière que sa base s'étende en travers, d'une paroi longitudinale 20 à l'autre, et que ses deux branches parallèles s'étendent contre les faces internes 20B en regard desdites parois longitudinales 20. Chaque pièce de renfort 36 vient de formation avec le capot 30 correspondant.

Les deux parois longitudinales 20 et le ou les capots 30 assemblés forment un profilé de section en U avec un espace intérieur 2A qui réceptionne divers appareillages électriques et/ou électroniques 51, 52, 53 placés côte à côte dans le profilé ainsi que les fils pour l'alimentation desdits appareillages.

Le boîtier 2, en forme de profilé de section en U, est ici dimensionné pour recevoir trois appareillages, par exemple, comme représenté sur les figures, une prise RJ45 51, une prise USB 52 et une prise de courant fort 53.

Bien entendu, d'autres types d'appareillages, comme des commutateurs électriques et/ou électroniques, peuvent être montés dans ce boîtier 2.

En variante, le boîtier 2 pourrait présenter d'autres dimensions pour accueillir seulement deux appareillages ou un quelconque nombre supérieur à trois d'appareillages.

A l'avant, les deux parois longitudinales 20 délimitent entre elles une ouverture longitudinale avant (non référencée) du boîtier 2 au travers de laquelle sont montés lesdits appareillages dans l'espace intérieur 2A du boîtier 2.

L'ouverture longitudinale avant du boîtier 2 est munie de deux bandes de clipsage aptes à permettre le montage côte à côte de manière jointive, de tronçons de couvercle ou de plaques enjoliveurs 40 supportant des mécanismes d'appareillage 50 fermés à l'avant par des enjoliveurs 51, 52, 53 donnant la fonction auxdits appareillages. Les bandes de clipsage permettent également le montage d'une plaque de finition (non représentée) qui recouvre les plaques enjoliveurs 40 en entourant au plus près les enjoliveurs 51, 52, 53 pour parfaire l'esthétique de l'ensemble et interdire à un utilisateur d'accéder à l'intérieur du boîtier 2.

Plus précisément, comme le montrent les figures 1, 3 et 5, chaque bande de clipsage comporte ici une aile longitudinale 28 rattachée par une entretoise 27 à la face interne 20B de la paroi longitudinale 20 correspondante.

Chaque aile longitudinale 28 et chaque entretoise 27 associées, sont situées à l'intérieur du boîtier 2 à distance du bord avant libre 21A de chaque paroi longitudinale 20.

Chaque entretoise 27 définit avec l'aile longitudinale 28 et la paroi longitudinale 20 correspondante, une gorge longitudinale interne, ouverte vers l'avant du boîtier 2.

L'ouverture longitudinale avant du boîtier 2 est donc bordée longitudinalement par les deux gorges longitudinales internes, ouvertes vers l'avant du boîtier 2

Selon l'exemple représenté sur les différentes figures, chaque aile longitudinale 28 comporte un talon qui s'étend vers la paroi arrière du boîtier 2 sous chaque gorge longitudinale interne. Chaque talon forme un rebord d'accrochage pour des moyens d'encliquetage prévus sur chaque tronçon de couvercle ou sur chaque plaque enjoliveur 40 ou encore sur la plaque de finition.

Toutefois, selon une variante non représentée, on peut prévoir que chaque aile longitudinale ne comporte pas de talon et s'arrête au ras de la face arrière de l'entretoise correspondante. La face arrière de chaque entretoise forme alors une face d'accrochage pour des moyens d'encliquetage prévus sur chaque tronçon de couvercle ou sur chaque plaque enjoliveur ou encore sur la plaque de finition.

Les plaques enjoliveurs 40 ferment ici toute l'ouverture longitudinale avant du boîtier 2 tandis que les capots 30 ferment toute l'ouverture longitudinale arrière du boîtier 2. Comme le montre notamment la figure 3, une fois montées sur le boîtier 2, les plaques enjoliveurs 40 laissent entre elles des espaces pour que des pattes d'encliquetage de la plaque de finition accèdent aux bandes de clipsage.

Chaque plaque enjoliveur 40 est formée d'une seule pièce en matière plastique moulée.

Elle comporte une paroi de fermeture 41 sur la face avant de laquelle émerge l'enjoliveur 51, 52, 53 dudit appareillage. Elle est bordée, le long de ses deux bords longitudinaux parallèles, d'une part, par une patte d'engagement 44 s'étendant perpendiculairement à ladite paroi de fermeture 41 et engagée dans la gorge longitudinale interne correspondante du boîtier 2, et, d'autre part, par deux pattes d'encliquetage 42, s'étendant perpendiculairement à ladite paroi de fermeture 41, de part et d'autre de la patte d'engagement 44 correspondante, munies à leur extrémité libre d'une dent 43 s'accrochant sous ladite gorge longitudinale interne correspondante du boîtier 2. Dans le cas particulier représenté, les dents 43 des pattes d'encliquetage 42 de chaque plaque enjoliveur 40 s'accrochent au talon de l'aile longitudinale 28 de la bande de clipsage correspondante du boîtier 2.

Lorsque chaque plaque enjoliveur 40 est montée sur le boîtier 2, sa paroi de fermeture 41 ferme localement ladite ouverture longitudinale avant du boîtier 2 en s'étendant en largeur d'une paroi longitudinale 20 à l'autre du boîtier 2, en regard de la paroi de fermeture d'un capot 30 correspondant du boîtier 2. La face avant de cette paroi de fermeture 41 s'étend à effleurement des bords avant libres 21A des parois longitudinales 20 du boîtier 2 (voir figures 3 et 4).

Par ailleurs, le bloc multi-appareillage 1 comporte sur les parois longitudinales 20 de son boîtier 2, des moyens de réception des dispositifs de montage 10.

Le montage des dispositifs de montage 10 dans ces moyens de réception sera décrit plus loin dans la description.

Ces moyens de réception sont plus particulièrement visibles sur les figures 1 à 4.

Plus précisément, chaque paroi longitudinale 20 du boîtier 2 comprend sur sa face externe 20A, à proximité de son bord avant libre 21A, une première et une deuxième nervures longitudinales 22A, 22B qui s'étendent en longueur suivant des directions parallèles audit bord avant libre 21A, et qui présentent des faces internes concaves en regard, définissant ensemble une deuxième gorge 22C au profil cylindrique dont l'ouverture longitudinale est orientée suivant une direction perpendiculaire à la face externe 20A de ladite paroi longitudinale 20. La deuxième nervure longitudinale 22B située en dessous de la première nervure longitudinale 22A, porte à son extrémité libre une première aile longitudinale 23 qui s'étend parallèlement à la face externe 20A de la paroi longitudinale 20, essentiellement vers l'arrière du boîtier 2. Cette première aile longitudinale 23 définit avec le côté droit de la deuxième nervure longitudinale 22B qui la porte et la paroi longitudinale 20 correspondante, une première rainure longitudinale 23A externe, ouverte vers l'arrière du boîtier 2.

En outre, chaque paroi longitudinale 20 du boîtier 2 comprend sur sa face externe 20A, à proximité de son bord arrière libre 21B, juste au-dessus de la première gorge 26A rainurée, une deuxième aile longitudinale 25 rattachée par une entretoise 24 à la face externe 20A de la paroi longitudinale 20. Cette deuxième aile longitudinale 25 s'étend parallèlement à la face externe 20A de la paroi longitudinale 20, complètement vers l'avant du boîtier 2. Elle définit avec l'entretoise 24 et la paroi longitudinale 20 correspondante, une deuxième rainure longitudinale 25A externe.

Comme le montrent plus particulièrement les figures 1, 6 et 7, chaque dispositif de montage 10 du bloc multi-appareillage 1 comprend un embout 100 en forme de U à rapporter sur une extrémité du boîtier 2 du bloc multi-appareillage 1.

L'embout 100 est réalisé d'une seule pièce, préférentiellement, dans un feuillard métallique ou une tôle d'épaisseur d'environ 1 mm découpée et pliée.

L'embout 100 comporte deux flancs latéraux 110 parallèles reliés par un flanc d'extrémité 120.

Chaque flanc latéral 110 présente un bord longitudinal supérieur 111A et un bord longitudinal inférieur 111B parallèles opposés ainsi qu'un bord transversal avant 111C et un bord transversal arrière 111D parallèles opposés.

Le bord longitudinal supérieur 111A de chaque flanc latéral 110 de l'embout 100, porte une patte 112 s'étendant perpendiculairement à la face interne 110B dudit flanc latéral 110, en direction de l'autre flanc latéral 110.

Le bord transversal arrière 111D de chaque flanc latéral 110 comporte une partie 111E qui se raccorde à une partie 121E d'un bord transversal 121D dudit flanc d'extrémité 120 de sorte qu'une fenêtre 122 est formée entre ledit bord transversal arrière 111D dudit flanc latéral 110 et ledit bord transversal 121D dudit flanc d'extrémité 120.

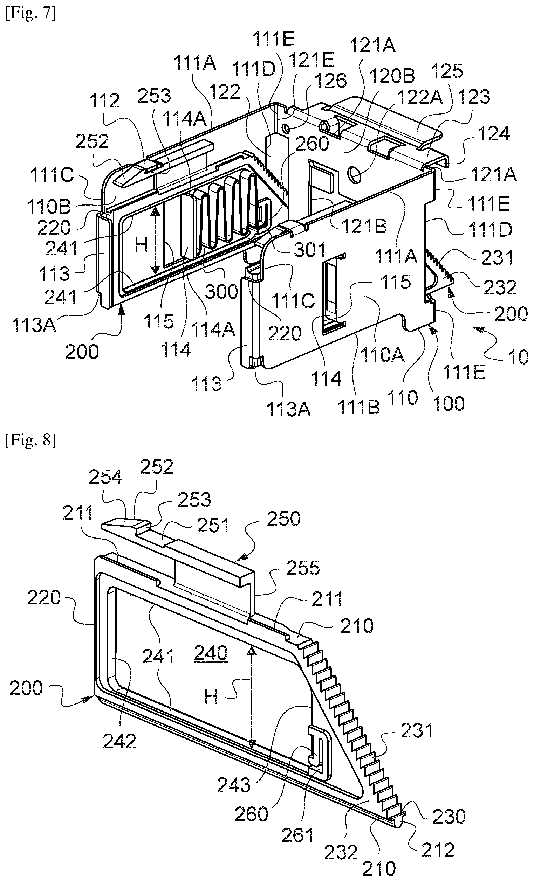

Le dispositif de montage 10 comporte en outre deux lames de verrouillage 200 placées respectivement sur l'un et l'autre flancs latéraux 110 de l'embout 100, le long desdites faces internes 110B desdits flancs latéraux 110 tournées l'une vers l'autre, chaque lame de verrouillage 200 étant adaptée à glisser le long dudit flanc latéral 110 correspondant, depuis une position rétractée (voir figures 6 et 7) vers une position d'extension (voir figure 13), au travers de ladite fenêtre 122 correspondante de l'embout 100, sous l'action d'un ressort de compression 300.

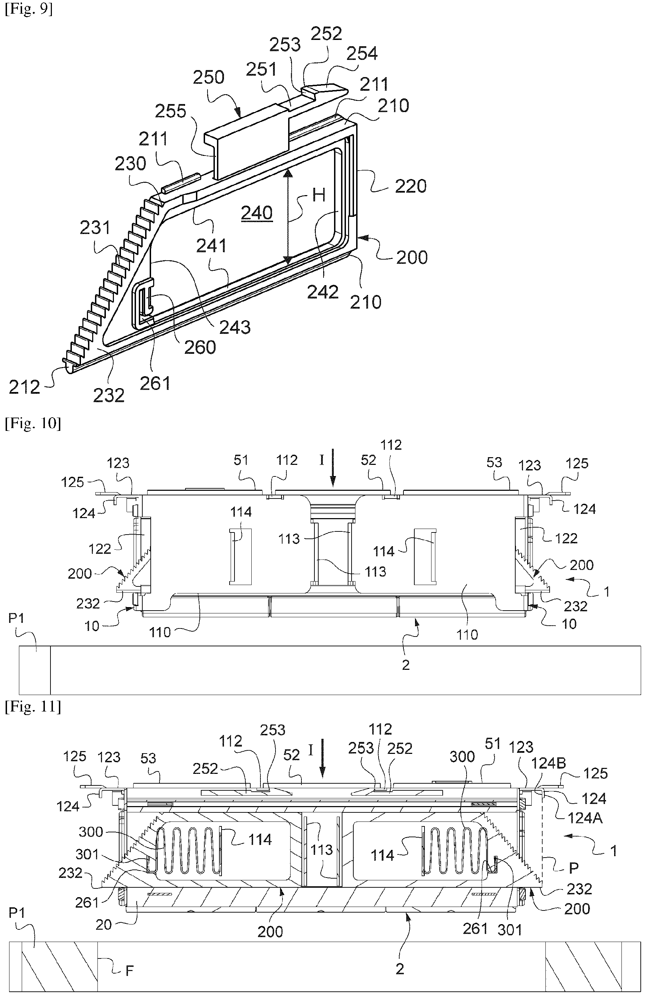

Le dispositif de montage 10 comprend deux éléments de retenu 250 (voir figures 8 et 9) liés respectivement à l'une et l'autre lames de verrouillage 200. Chaque élément de retenue 250 comprend une dent 253 adaptée à s'accrocher sur un bord de ladite patte 112 du flanc latéral 110 correspondant de l'embout 100 pour retenir ladite lame de verrouillage 200 en position rétractée avec le ressort de compression 300 à l'état compressé. Chaque élément de retenue 250 est en outre déformable élastiquement sous une action de pression pour libérer ladite dent 253 de son accrochage sur le bord de ladite patte 112 et ainsi autoriser la détente élastique du ressort de compression 300 entraînant ladite lame de verrouillage 200 vers sa position d'extension.

Comme le montrent plus particulièrement les figures 6 et 7, chaque flanc latéral 110 de l'embout 100 porte en saillie sur sa face interne 110B, deux murets 113, 114 s'étendant en longueur perpendiculairement auxdits bords longitudinaux supérieur 111A et inférieur 111B du flanc latéral 110.

Chaque muret 113, 114 est formé par découpage et repliement d'une partie du flanc latéral 110 correspondant de l'embout 100. Le premier muret 113 s'étend le long du bord transversal avant 111C du flanc latéral 110. Il est raccordé par une partie coudée audit bord transversal avant 111C. Une encoche 113A est formée à la jonction du bord longitudinal inférieur 111B du flanc latéral 110 et du bord inférieur du premier muret 113. Le second muret 114, le plus proche du flanc d'extrémité 120 de l'embout 100, s'étend à partir du bord d'une fenêtre 115 réalisée par découpage dans ledit flanc latéral 110 correspondant.

Pour chaque flanc latéral 110, les deux murets 113, 114 sont espacés l'un de l'autre selon la direction longitudinale dudit flanc latéral 110 de telle manière qu'ils forment des butées contre lesquelles ladite lame de verrouillage 200 s'appuie respectivement dans ses positions rétractée et d'extension. Le premier muret 113 forme une butée contre laquelle la lame de verrouillage 200 s'appuie en position rétractée (voir figures 6, 7, 11 et 12) tandis que le second muret 114 forme une butée contre laquelle la lame de verrouillage 200 s'appuie en position d'extension (voir figure 13).

Comme le montrent les figures 6 et 7, le flanc d'extrémité 120 de l'embout 100 comporte une large ouverture centrale rectangulaire si bien qu'il présente une forme en U ou en arche avec deux branches 120A parallèles raccordées en partie supérieure par une base 120B. C'est une partie 121E d'un bord 121D longitudinal externe des branches 120A du flanc d'extrémité 120 de l'embout 100 qui est raccordée à une partie 111E du bord transversal arrière 111D des flancs latéraux 110 pour former, à la jonction du flanc d'extrémité 120 et des flanc latéraux 110, les deux fenêtres 122 de l'embout 100 au travers desquelles les lames de verrouillage 200 glissent entre leurs positions rétractée et d'extension. Les branches 120A du flanc d'extrémité 120 comportent, du côté de l'ouverture centrale rectangulaire du flanc d'extrémité 120, des bords 121B longitudinaux internes parallèles. Comme cela sera expliqué ultérieurement, ces bords 121B internes du flanc d'extrémité 120 constituent des bords de glissement pour le montage de glissières d'une paroi latérale d'extrémité 60 du boîtier 2. La base 120B du flanc d'extrémité 120 de l'embout 100 comporte, dans une partie centrale, une ouverture 122A circulaire servant également au montage de ladite paroi latérale d'extrémité 60 du boîtier 2. Par ailleurs, le flanc d'extrémité 120 comporte une plateforme 125 qui s'étend en porte-à-faux à partir d'un rebord supérieur 123 s'étendant lui-même à partir d'un bord longitudinal 121A supérieur du flanc d'extrémité 120 vers l'extérieur de l'embout 100, perpendiculairement audit flanc d'extrémité 120. Le rebord supérieur 123 comprend une partie d'extrémité libre recourbée vers le bas pour former deux becs 124 de part et d'autre de la plateforme 125. Enfin, le flanc d'extrémité 120 est percé de plusieurs orifices 126 au travers desquels sont engagées des vis V pour la fixation du dispositif de montage 10 sur le boîtier 2 du bloc multi-appareillage 1.

Sur les figures 8 et 9, on a représenté plus particulièrement une des deux lames de verrouillage 200 du dispositif de montage 10. Les deux lames de verrouillage 200 du dispositif de montage 10 sont identiques.

Cette lame de verrouillage 200 se présente sous la forme d'une plaquette rigide avec deux tranches longitudinales externes 210 parallèles reliées à l'arrière par une tranche transversale arrière externe 220 droite et à l'avant par une tranche transversale avant externe 230 en biais formant un nez 232 en pointe avec la tranche longitudinale externe 210 inférieure.

La tranche longitudinale externe 210 inférieure est conformée en un bourrelet 212 longitudinal avec, de part et d'autre de ce bourrelet 212, deux parties plates longitudinales.

La tranche transversale avant externe 230 en biais est crantée par une série de dents 231.

La lame de verrouillage 200 comprend une large ouverture centrale 240 de forme globalement rectangulaire de sorte qu'elle se présente sous la forme d'un cadre rigide.

Cette ouverture centrale 240 est délimitée par deux bords longitudinaux internes 241, un bord transversal avant interne 243 (situé du côté du nez 232 en pointe) et un bord transversal arrière interne 242. L'ouverture centrale 240 présente une hauteur H.

La lame de verrouillage 200 comprend dans une partie avant située entre la tranche transversale avant externe 230 crantée et le bord transversal avant interne 243, un crochet 260 formé par une fente en L 261 qui débouche sur le bord transversal avant interne 243.

La tranche longitudinale externe 210 supérieure de la lame de verrouillage 200 porte ledit élément de retenue 250 qui, ici, fait partie intégrante de ladite lame de verrouillage 200.

Cet élément de retenue 250 se présente sous la forme d'une tige flexible 252 pourvue de ladite dent 253 située à proximité de l'extrémité libre de ladite tige flexible 252 dont l'autre extrémité est liée à une plaquette rigide 255 attachée à la lame de verrouillage 200.

La tige flexible 252 est une languette rectangulaire dont une face principale longitudinale s'étend parallèlement à la tranche longitudinale externe 210 supérieure de la lame de verrouillage 200. La plaquette rigide 255 formée d'une seule pièce avec la tige flexible 252, s'étend à partir d'une face latérale de la languette rectangulaire formant ladite tige flexible 252, jusqu'à la tranche longitudinale externe 210 supérieure de la lame de verrouillage 200, perpendiculairement aux faces principales longitudinales de ladite languette rectangulaire formant la tige flexible 252. La plaquette rigide 255 s'étend le long d'un bord longitudinal de ladite tranche longitudinale externe 210 supérieure de la lame de verrouillage 200 tandis qu'un bourrelet 211 longe l'autre bord longitudinal de ladite tranche longitudinale externe 210 supérieure de la lame de verrouillage 200, cette tranche longitudinale externe 210 supérieure formant une rainure entre ledit bourrelet 211 et ladite plaquette rigide 255. Partant de l'extrémité libre de la tige flexible 252, la face principale longitudinale supérieure de ladite tige flexible 252 forme un pan incliné 254 puis un décroché droit constituant la dent 253, puis un cran 251 en creux.

Chaque lame de verrouillage 200 du dispositif de montage 10 est préférentiellement une pièce monobloc en matière plastique moulée telle que du polyamide chargé en fibres de verre.

Comme le montrent les figures 6 et 7, chacune des deux lames de verrouillage 200 est rapportée en position rétractée contre la face interne 110B de chaque flanc latéral 110 de l'embout 100.

Chaque lame de verrouillage 200 munie de l'élément de retenue 250 s'étend en hauteur du bord longitudinal supérieur 111A au bord longitudinal inférieur 111B du flanc latéral 110 de l'embout 100 si bien que la tige flexible 252 de l'élément de retenue s'étend le long du bord longitudinal supérieur 111A du flanc latéral 110 correspondant de l'embout 100.

Dans cette position rétractée, la dent 253 de la tige flexible 252 de l'élément de retenue attaché à chaque lame de verrouillage 200 est accrochée à un bord de la patte 112 qui s'étend à partir du bord longitudinal supérieur 111A du flanc latéral 110 de l'embout 100. Cette patte 112 est engagée dans le cran 251 de ladite tige flexible 252. La tranche transversale arrière externe 220 de chaque lame de verrouillage 200 est placée en butée contre le premier muret 113 du flanc latéral 110 correspondant et le nez 232 de ladite lame de verrouillage 200 s'étend au travers d'une fenêtre 122 de l'embout 100 de telle manière que la pointe du nez 232 ne dépasse pas les deux becs 124 du rebord supérieur 123 de l'embout 100. Plus précisément, la pointe du nez 232 de chaque lame de verrouillage 200 est positionnée à l'aplomb P de la face interne 124B des becs 124 du rebord supérieur 123 de l'embout 100 (voir figures 2 et 11).

Comme le montre plus particulièrement la figure 7, la hauteur H de l'ouverture centrale 240 de chaque lame de verrouillage 200 est égale au jeu près à la hauteur du second muret 114 qui fait saillie sur la face interne 110B du flanc latéral 110 de l'embout 100. Ainsi, lorsque ladite lame de verrouillage 200 est placée contre ladite face interne 110B, ledit second muret 114 s'étend à l'intérieur de l'ouverture centrale de ladite lame de verrouillage 200, les bords d'extrémité 114A du second muret 114 se positionnant à proximité des bords longitudinaux internes 241 de ladite lame de verrouillage 200, ce qui participe au bon maintien de celle-ci contre la face interne 110B du flanc latéral 110 de l'embout 100.

Comme le montrent les figures 6 et 7, chaque ressort de compression 300 se présente sous la forme d'une lame ressort logée dans l'ouverture centrale 240 d'une lame de verrouillage 200. Une extrémité 301 du ressort de compression 300 est engagée dans la fente en L 261 du crochet 260 de la lame de verrouillage 200 pour être liée à celle-ci tandis que l'autre extrémité du ressort de compression 300 est en appui contre ledit second muret 114 du flanc latéral 110 correspondant de l'embout 100. Dans la position rétractée de chaque lame de verrouillage 200, représentée sur les figures 6 et 7, chaque ressort de compression 300 est compressé entre le second muret 114 du flanc latéral 110 de l'embout 100 et le bord transversal avant interne 243 de la lame de verrouillage 200.

Le maintien de la position rétractée de chaque lame de verrouillage 200 est assuré par l'accrochage de la dent 253 de l'élément de retenue sur le bord de la patte 112 du flanc latéral 110 de l'embout 100 du dispositif de montage 10.

Avant de rapporter chaque dispositif de montage 10 sur chaque extrémité du boîtier 2, une paroi latérale d'extrémité 60 du boîtier 2 est glissée sur les bords 121B internes du flanc d'extrémité 120 de chaque embout 100 et est encliquetée dans l'ouverture 122A circulaire prévue dans la partie centrale de la base 120B dudit flanc d'extrémité 120 pour fermer la large ouverture centrale rectangulaire dudit flanc d'extrémité 120.

Dans une configuration dite de libération, avec ses lames de verrouillage 200 en position rétractée, chaque dispositif de montage 10 est rapporté sur une extrémité du boîtier 2 du bloc multi-appareillage 1 (voir figures 1 et 2).

Pour cela, chaque lame de verrouillage 200 est enfilée dans les première et deuxième rainures longitudinales 23A, 25A prévues sur la face externe 20A de chaque paroi longitudinale 20 du boîtier 2 de sorte que :
- les flancs latéraux 110 de l'embout 100 viennent recouvrir la face externe 20A des parois longitudinales 20 du boîtier 2 dans le prolongement des retours 31 des capots 30,
- le flanc d'extrémité 120 de l'embout 100 muni de ladite paroi latérale d'extrémité 60, vient obturer l'ouverture d'extrémité correspondante du boîtier 2 (voir figure 2), et
- le rebord supérieur 123 et la plateforme 125 de l'embout 100 s'étendent vers l'extérieur du boîtier 2, sensiblement à effleurement des faces avant des parois de fermeture 41 des plaques enjoliveurs 40 des appareillages, avec les nez 232 desdites lames de verrouillage 200 qui émergent, au travers des fenêtres 122 de l'embout 100, à l'extérieur du boîtier 2 en étant placés à l'aplomb des becs 124 dudit rebord supérieur 123.

Plus précisément, en partie supérieure de chaque lame de verrouillage 200, le bourrelet 211 qui borde la tranche longitudinale externe 210 supérieure, s'enfile dans la première rainure longitudinale 23A externe, ouverte vers l'arrière de la paroi longitudinale 20 correspondante du boîtier 2. De manière concomitante, la première aile longitudinale 23 portée par la deuxième nervure longitudinale 22B attachée à la face externe 20A de la paroi longitudinale 20 du boîtier 2, s'enfile dans la rainure formée par ladite tranche longitudinale externe 210 supérieure de la lame de verrouillage 200. Enfin, la première nervure longitudinale 22A attachée à la face externe 20A de la paroi longitudinale 20 correspondante du boîtier 2, se place sous la tige flexible 252 de l'élément de retenue attaché à la lame de verrouillage 200 de sorte qu'une extrémité de la deuxième gorge 22C externe de la paroi longitudinale 20 du boîtier 2 se place en regard d'un orifice 126 du flanc d'extrémité 120 de l'embout 100.

Comme le montre la figure 2, avantageusement, chaque tige flexible 252 attachée à chaque lame de verrouillage 200, est aisément accessible à un utilisateur, en face avant du bloc multi-appareillage 1.

Plus précisément également, en partie inférieure de chaque lame de verrouillage 200, la tranche longitudinale externe 210 inférieure munie de son bourrelet 212, s'enfile dans la deuxième rainure longitudinale 25A externe, ouverte vers l'avant de la paroi longitudinale 20 correspondante du boîtier 2. De manière concomitante, une extrémité de la première gorge 26 externe de la paroi longitudinale 20 du boîtier 2 se place en regard d'un orifice 126 du flanc d'extrémité 120 de l'embout 100.

Comme le montre plus particulièrement la figure 2, chaque flanc latéral 110 de l'embout 100 présente un bord longitudinal inférieur 111B qui forme un décroché de sorte que, partant d'une extrémité du boîtier 2, ledit bord longitudinal inférieur 111B longe sur une courte distance le bord inférieur du boîtier 2 (formé par un bord longitudinal des parois de fermeture des capots 30), ledit flanc latéral 110 recouvrant une petite partie de la face externe du retour 31 d'un capot 30 (celui situé à l'extrémité du boîtier 2), puis ledit bord longitudinal inférieur 111B longe le bord libre des retours 31 des capots 30, ledit flanc latéral 110 recouvrant la face externe de la deuxième aile longitudinale 25 rattachée par l'entretoise 24 à la face externe 20A de la paroi longitudinale 20 du boîtier 2. La majeure partie de la face externe 110A du flanc latéral 110 de l'embout 100 s'étend alors dans le prolongement de la face externe des retours 31 des capots 30. La deuxième aile longitudinale 25 s'engage dans l'encoche 113A formée à la jonction du bord longitudinal inférieur 111B du flanc latéral 110 et du bord inférieur du premier muret 113 du flanc latéral 110 de l'embout 100 contre lequel s'appuie la tranche transversale arrière 220 de la lame de verrouillage 200. Une partie de ce premier muret 113 se place alors dans la deuxième rainure longitudinale 25A externe, ouverte vers l'avant, de la paroi longitudinale 20 correspondante du boîtier 2.

Chaque dispositif de montage 10 ainsi enfilé sur chaque extrémité du boîtier 2, est fixé sur celui-ci par le serrage des vis V vissées dans les gorges 26, 22C externes des parois longitudinales 20 du boîtier 2.

Le montage du bloc multi-appareillage 1 dans l'ouverture F d'une paroi de réception P1 est plus particulièrement représenté sur les figures 10 à 13.

Le bloc multi-appareillage 1 avec ses dispositifs de montage 10 en configuration de libération, est approché de l'ouverture F de la paroi de réception P1 suivant le sens d'introduction matérialisé par la flèche I visible sur les figures 10 et 11. L'ouverture F présente bien entendu une longueur adaptée à recevoir ce bloc multi-appareillage 1. Ainsi, la longueur de cette ouverture F est égale, au jeu près, à la longueur du bloc multi-appareillage 1, mesurée entre la face externe 124A des becs 124 du rebord supérieur 123 du flanc d'extrémité 120 d'un embout 100 et la face externe 124A des becs 124 du rebord supérieur 123 du flanc d'extrémité 120 de l'autre embout 100 opposé. Le bloc multi-appareillage 1 est introduit dans ladite ouverture F de sorte que les faces externes 124A des becs 124 des rebords supérieurs 123 des embouts 100 des dispositifs de montage 10, s'appuient contre la face interne de la paroi de réception P1 délimitant ladite ouverture F et que les deux plateformes 125 qui s'étendent en porte-à-faux à partir de ces rebords supérieurs 123, s'appuient contre la face avant S de ladite paroi de réception P1 (voir figure 12). Les lames de verrouillage 200 des dispositifs de montage 10, en position rétractée, ne gênent pas l'introduction du bloc-multi-appareillage 1 dans l'ouverture F puisque la pointe de leur nez 232 ne dépasse pas lesdits becs 124 des rebords supérieurs 123 des embouts 100.

Dans cette position engagée dans l'ouverture F, le bloc multi-appareillage 1 est en appui par les plateformes 25 sur une partie de la paroi de réception P1 qui borde l'ouverture F, mais il n'est pas verrouillé dans cette ouverture F.

Pour le verrouiller dans l'ouverture F, il suffit d'exercer avec la pointe d'un outil une pression sur chaque tige flexible 252 (facilement accessible par l'avant du bloc multi-appareillage 1) de façon à la déformer élastiquement pour libérer chaque dent 253 de son accrochage sur le bord de chaque patte 112 de l'embout 100 et ainsi autoriser la détente de chaque ressort de compression 300 qui entraîne en coulissement chaque lame de verrouillage 200 au travers des fenêtres 122 de l'embout 100 vers sa position d'extension (voir figure 13).

Chaque lame de verrouillage 200 atteint sa position d'extension lorsque son bord transversal arrière interne 242 vient en butée contre le deuxième muret 114 porté par le flanc latéral 110 de l'embout 100 (voir figure 13).

Dans la position d'extension, représentée sur la figure 13, une partie avant de chaque lame de verrouillage 200 s'étend sous la paroi de réception P1. La paroi de réception P1 est ainsi prise en sandwich entre les plateformes 125 de l'embout 100 et les lames de verrouillage 200 des dispositifs de montage 10 en configuration de verrouillage, ce qui empêche tout extraction du bloc multi-appareillage 1 hors de l'ouverture F. Avantageusement, une partie des dents 231 du crantage de la tranche transversale avant externe 230 en biais de chaque lame de verrouillage 200 s'accroche à ladite paroi de réception P1 pour renforcer la retenue mécanique du bloc multi-appareillage 1 à ladite paroi de réception P1.

Pour extraire le bloc multi-appareillage 1 de l'ouverture F, il convient de placer chaque dispositif en configuration de libération avec ses lames de verrouillage 200 en position rétractée.

Pour cela, avec la pointe d'un outil, il convient de faire coulisser chaque tige flexible 252 depuis sa position de libération (voir figure 13) jusqu'à sa position d'accrochage (voir figure 12) dans laquelle la dent 253 qu'elle porte est accrochée à chaque patte 112 de l'embout 100. Lors de ce mouvement arrière de coulissement, l'extrémité libre de chaque tige flexible 252 rencontre la patte 112 de l'embout 100 qui glisse sur le pan incliné 254 de ladite tige flexible 252 en provoquant la déformation élastique de celle-ci jusqu'à ce que ladite patte 112 s'engage dans le cran 251 de la tige flexible 252 où elle est de nouveau accrochée à la dent 253 de la tige flexible 252. Lors de ce mouvement arrière de coulissement, chaque tige flexible 252, rattachée à la lame de verrouillage 200 par la plaquette rigide 255, entraîne ladite lame de verrouillage 200 qui coulisse dans lesdites première et deuxième rainures longitudinales 23A, 25A externes du boîtier 2 depuis sa position d'extension jusqu'à sa position rétractée en provoquant la compression du ressort de compression 300 associé.

## Revendications

1. Dispositif de montage (10) d'un bloc multi-appareillage (1) dans une ouverture (F) d'une paroi de réception (P1), comprenant :
- un embout (100) comportant deux flancs latéraux (110) parallèles reliés par un flanc d'extrémité (120), chaque flanc latéral (110) comprenant un bord transversal arrière (111D) dont une partie (111E) se raccorde à une partie (121E) d'un bord transversal (121D) dudit flanc d'extrémité (120) de sorte qu'une fenêtre (122) est formée entre ledit bord transversal arrière (111D) dudit flanc latéral (110) et ledit bord transversal (121D) dudit flanc d'extrémité (120),
- deux lames de verrouillage (200) placées respectivement sur l'un et l'autre flancs latéraux (110) de l'embout (100), le long desdites faces internes (110B) desdits flancs latéraux tournées l'une vers l'autre, chaque lame de verrouillage (200) étant adaptée à glisser le long dudit flanc latéral correspondant, depuis une position rétractée vers une position d'extension, au travers de ladite fenêtre (122) correspondante, sous l'action d'un ressort de compression (300),
- deux éléments de retenue (252) liés respectivement à l'une et l'autre lames de verrouillage (200), chaque élément de retenue comprenant une dent (253),
**caractérisé en ce que** l' embout (100) présente une forme de U à rapporter sur une extrémité d'un boîtier (2) du bloc multi-appareillage, **en ce que** le flanc d'extrémité (120) de l'embout (100) comporte une plateforme (125) qui s'étend en porte-à-faux à partir d'un rebord supérieur (123) dudit flanc d'extrémité (120) pour former une surface d'appui contre un bord de l'ouverture (F) de la paroi de réception (P1) dans laquelle est introduit le bloc multi-appareillage équipé de l'embout, **en ce que** chaque flanc latéral (110) de l'embout (100) présente un bord longitudinal supérieur (111A) portant une patte (112) s'étendant en direction de l'autre flanc latéral, **en ce que** la dent (253)de chaque élément de retenue (252) est adaptée à s'accrocher sur un bord de ladite patte (112) du flanc latéral (110) correspondant de l'embout (100) pour retenir ladite lame de verrouillage (200) en position rétractée avec le ressort de compression (300) à l'état compressé et **en ce que** chaque élément de retenue (252) est déformable élastiquement sous une action de pression pour libérer ladite dent (253) de son accrochage sur le bord de ladite patte (112) et ainsi autoriser la détente élastique du ressort de compression (300) entraînant ladite lame de verrouillage (200) vers sa position d'extension.

2. Dispositif de montage (10) selon la revendication 1, dans lequel chaque flanc latéral (110) de l'embout (100) porte en saillie sur sa face interne (110B), deux murets (113,114) s'étendant en longueur perpendiculairement audit bord longitudinal supérieur (111A) et étant espacés l'un de l'autre selon la direction longitudinale dudit flanc latéral (110) de telle manière qu'ils forment des butées contre lesquelles ladite lame de verrouillage (200) s'appuie respectivement dans ses positions rétractée et d'extension.

3. Dispositif de montage (10) selon la revendication 2, dans lequel, dans chaque flanc latéral (110) de l'embout, le muret (113) formant la butée pour ladite lame de verrouillage (200) dans sa position rétractée s'étend le long d'un bord transversal avant (111C) opposé audit bord transversal arrière (111D) dudit flanc latéral (110).

4. Dispositif de montage (10) selon l'une des revendications 2 ou 3, dans lequel chaque lame de verrouillage (200) comprend une ouverture centrale (240) dans laquelle est logé ledit ressort de compression (300) dont une extrémité (301) est liée à ladite lame de verrouillage (200) tandis que l'autre extrémité est en appui contre ledit muret (114) du flanc latéral (110) correspondant de l'embout (100), formant la butée pour la lame de verrouillage (200) dans sa position d'extension.

5. Dispositif de montage (10) selon l'une des revendications 1 à 4, dans lequel chaque lame de verrouillage (200) se présente sous la forme d'une plaquette rigide avec deux tranches longitudinales externes (210) parallèles reliées à l'arrière par une tranche transversale arrière externe (220) droite et à l'avant par une tranche transversale avant externe (230) en biais formant un nez (232) en pointe.

6. Dispositif de montage (10) selon la revendication précédente, dans lequel la tranche transversale avant externe (230) de chaque lame de verrouillage (200) est crantée.

7. Dispositif de montage (10) selon l'une des revendications 5 ou 6, dans lequel chaque lame de verrouillage (200) comprend une large ouverture centrale (240) de forme globalement rectangulaire de sorte qu'elle se présente sous la forme d'un cadre rigide.

8. Dispositif de montage (10) selon l'une quelconque des revendications précédentes, dans lequel chaque élément de retenue se présente sous la forme d'une tige flexible (252) pourvue de ladite dent (253) située à proximité de l'extrémité libre de ladite tige flexible (253) dont l'autre extrémité est liée à une plaquette rigide (255) liée à la lame de verrouillage (200) correspondante.

9. Bloc multi-appareillage (1) comprenant un boîtier (2) de forme parallélépipédique rectangle avec deux parois longitudinales (20) parallèles, **caractérisé en ce qu'**il comprend deux dispositifs de montage (10) selon l'une quelconque des revendications 1 à 8 équipant les deux extrémités du boîtier (2), l'embout (100) de chaque dispositif de montage (10) étant fixé sur ledit boîtier (2) de sorte que les deux flancs latéraux (110) dudit embout (100) recouvrent une partie des faces externes (20A) des parois longitudinales (20) dudit boîtier (2) et le flanc d'extrémité (120) dudit embout (100) ferme une partie d'une ouverture d'extrémité dudit boîtier (2), les faces externes (20A) desdites parois longitudinales (20) du boîtier (2) comportant des rainures longitudinales (23A,25A) externes dans lesquelles sont glissées les deux lames de verrouillage (200) de chaque dispositif de montage (10).

10. Bloc multi-appareillage (1) selon la revendication 9, dans lequel le boîtier (2) comporte deux parois latérales d'extrémité (60) rapportées sur les flancs d'extrémité (120) des embouts (100) desdits dispositifs de montage (10) pour fermer entièrement les deux ouvertures d'extrémité dudit boîtier (2).

11. Bloc multi-appareillage (1) selon la revendication précédente, dans lequel chaque paroi latérale d'extrémité (60) du boîtier (2) est glissée sur des bords de glissement (121B) correspondants du flanc d'extrémité (120) de l'embout (100) du dispositif de montage (10) correspondant.

12. Bloc multi-appareillage (1) selon l'une des revendications 10 et 11, dans lequel chaque paroi latérale d'extrémité (60) du boîtier (2) est encliquetée dans une ouverture (122A) prévue dans le flanc d'extrémité (120) de l'embout (100) du dispositif de montage (10) correspondant.

## Patentansprüche

1. Vorrichtung (10) zur Montage eines Blocks (1) mit mehreren Apparaten in eine Öffnung (F) einer Montageflanke (P1) mit
- einem Endstück (100) mit zwei durch eine Endflanke (120) miteinander verbundenen Seitenflanken (110), wobei jede Seitenflanke (110) einen hinteren Querrand (111D) aufweist, von dem ein Teil (111E) mit einem Teil (121E) eines Querrands (121D) der Endflanke (120) verbunden ist, so daß zwischen dem hinteren Querrand (111D) der Seitenflanke (110) und dem Querrand (121D) der Endflanke (120) ein Fenster (122) gebildet ist,
- zwei jeweils auf der einen und der anderen Seitenflanke (110) des Endstücks (100) entlang der Innenseiten (110B) der einander zugewandten Seitenflanken angeordneten Verriegelungszungen (200), wobei jede Verriegelungszunge (200) dazu ausgelegt ist, unter der Einwirkung einer Druckfeder (300) entlang der entsprechenden Seitenflanke von einer zurückgezogenen Position zu einer ausgefahrenen Position durch das entsprechende Fenster (122) zu gleiten,
- zwei jeweils mit der einen und der anderen Verriegelungszunge (200) verbundenen Rückhalteelementen (252), wobei jedes Rückhalteelement einen Zahn (253) aufweist,
**dadurch gekennzeichnet, daß** das Endstück (100) eine an einem Ende eines Gehäuses (2) des Blocks mit mehreren Apparaten anzubringende U-Form aufweist, daß die Endflanke (120) des Endstücks (100) eine Platte (125) aufweist, die sich von einem oberen Rand (123) der Endflanke (120) aus freitragend erstreckt, um eine Fläche für einen Andruck gegen einen Rand der Öffnung (F) der Aufnahmeflanke (P1) zu bilden, in die der Block mit mehreren Apparaten eingeführt wird, daß jede Seitenflanke (110) des Endstücks (100) einen oberen Längsrand (111A) mit einer zur anderen Seitenflanke hin gerichteten Platte (112) aufweist, daß der Zahn (253) jedes Rückhalteelements (252) dazu ausgelegt ist, an einem Rand der Platte (112) der entsprechenden Seitenflanke (110) des Endstücks (100) einzuhaken, um die Verriegelungszunge (200) mit der Druckfeder (300) im zusammengepreßten Zustand in der eingezogenen Position zurückzuhalten, und daß jedes Rückhalteelement (252) bei Ausübung eines Drucks elastisch verformbar ist, um den Zahn (253) von dessen Einhaken am Rand der Platte (112) zu lösen und so ein elastisches Entspannen der Druckfeder (300) zu ermöglichen, was die Verriegelungszunge (200) in deren ausgezogene Position zurückbringt.

2. Montagevorrichtung (10) gemäß Anspruch 1, bei der jede Seitenflanke (110) des Endstücks (100) zwei auf ihrer Innenseite (110B) hervorstehende Wandungen (113, 114) aufweist, die sich der Länge nach quer zum oberen Längsrand (111A) erstrecken und in der Längsrichtung der Seitenflanke (110) so voneinander beabstandet sind, daß sie Anschläge bilden, an denen die Verriegelungszunge (200) in ihrer eingezogenen beziehungsweise ausgezogenen Position anschlägt.

3. Montagevorrichtung (10) gemäß Anspruch 2, bei der sich in jeder Seitenflanke (110) des Endstücks die den Anschlag für die Verriegelungszunge (200) in ihrer eingezogenen Position bildende Wandung (113) entlang eines vom hinteren Querrand (111D) der Seitenflanke (110) abgewandten vorderen Querrands (111C) erstreckt.

4. Montagevorrichtung (10) gemäß einem der Ansprüche 2 oder 3, bei der jede Verriegelungszunge (200) eine zentrale Öffnung (240) aufweist, in der die Druckfeder (300) untergebracht ist, von der ein Ende (301) mit der Verriegelungszunge (200) verbunden ist, während das andere Ende an der Wandung (114) der entsprechenden Seitenflanke (110) des Endstücks (100) anliegt, die den Anschlag für die Verriegelungszunge (200) in ihrer ausgefahrenen Position bildet.

5. Montagevorrichtung (10) gemäß einem der Ansprüche 1 bis 4, bei der jede Verriegelungszunge (200) in Form einer steifen Plakette mit zwei parallelen äußeren Längskanten (210) vorliegt, die hinten durch eine gerade äußere hintere Querkante (220) und vorne durch eine schräge, eine spitze Nase (232) bildende äußere vordere Querkante (230) verbunden sind.

6. Montagevorrichtung (10) gemäß dem vorangehenden Anspruch, bei der die äußere vordere Querkante (230) jeder Verriegelungszunge (200) gezahnt ist.

7. Montagevorrichtung (10) gemäß einem der Ansprüche 5 oder 6, bei der jede Verriegelungszunge (200) eine große zentrale Öffnung (240) von im wesentlichen rechteckiger Form aufweist, so daß sie in Form eines steifen Rahmens vorliegt.

8. Montagevorrichtung (10) gemäß einem der vorangehenden Ansprüche, bei der jedes Rückhalteelement in Form eines flexiblen Stabes (252) vorliegt, der mit dem in der Nähe des freien Endes des flexiblen Stabs (253) angeordneten Zahn (253) versehen ist, dessen anderes Ende mit einer mit der entsprechenden Verriegelungszunge (200) verbundenen steifen Plakette (255) verbunden ist.

9. Block (1) mit mehreren Apparaten mit einem quaderförmigen Gehäuse (2) mit zwei parallelen Längswänden (20), **dadurch gekennzeichnet, daß** er zwei Montagevorrichtungen (10) gemäß einem der Ansprüche 1 bis 8 aufweist, mit denen die beiden Enden des Gehäuses (2) versehen sind, wobei das Endstück (100) jeder Montagevorrichtung (10) an dem Gehäuse (2) so gefestigt ist, daß die beiden Seitenflanken (110) des Endstücks (100) einen Teil der Außenseiten (20A) der Längswände (20) des Gehäuses (2) bedecken und die Endflanke (120) des Endstücks (100) einen Teil einer Öffnung des Endes des Gehäuses (2) verschließt, wobei die Außenseiten (20A) der Längswände (20) des Gehäuses (2) äußere Längsrillen (23A, 25A) aufweisen, in die die beiden Verriegelungszungen (200) jeder Montagevorrichtung (10) eingeschoben sind.

10. Block (1) mit mehreren Apparaten gemäß Anspruch 9, bei dem das Gehäuse (2) zwei an den Endflanken (120) des Endstücks (100) der Montagevorrichtungen (10) angebrachte Endseitenwände (60) aufweist, um die beiden Endöffnungen des Gehäuses (2) völlig zu verschließen.

11. Block (1) mit mehreren Apparaten gemäß dem vorangehenden Anspruch, bei dem jede Endseitenwand (60) des Gehäuses (2) auf die entsprechenden Gleitränder (121B) der Endflanke (120) des Endstücks (100) der entsprechenden Montagevorrichtung (10) aufgeschoben ist.

12. Block (1) mit mehreren Apparaten gemäß einem der Ansprüche 10 und 11, bei dem jede Endseitenwand (60) des Gehäuses (2) in einer in der Endflanke (120) des Endstücks (100) der Montagevorrichtung (10) vorgesehenen Öffnung (122A) eingerastet ist.

## Claims

1. A mounting device (10) for a multi-appliance block (1) in an opening (F) of a receiving wall (P1), comprising:
- an end piece (100) comprising two parallel side flanks (110) connected by an end flank (120), each side flank (110) comprising a rear transverse edge (111D), a portion (111E) of which connects to a portion (121E) of a transverse edge (121D) of said end flank (120) so that a window (122) is formed between said rear transverse edge (111D) of said side flank (110) and said transverse edge (121D) of said end flank (120),
- two locking blades (200) located respectively on each side flank (110) of the end piece (100), facing each other along said inner faces (1106) of said side flanks, each locking blade (200) being suitable for sliding along said corresponding side flank, from a retracted position to an extended position, through said corresponding window (122), under the action of a compression spring (300),
- two retaining elements (252) connected respectively to each locking blade (200), each retaining element comprising a tooth (253),
**characterized in that**
the end piece (100) has a U-shape to be attached to an end of a casing (2) of the multi-appliance block, **in that** the end flank (120) of the end piece (100) comprises a platform (125) that extends cantilevered from an upper rim (123) of said end flank (120) to form a bearing surface against an edge of the opening (F) of the receiving wall (P1) into which the multi-appliance block equipped with the end piece is introduced, **in that** each side flank (110) of the end piece (100) has an upper longitudinal edge (111A) carrying a tab (112) extending towards the other side flank, **in that** the tooth (253) of each retaining element (252) is suitable for latching on an edge of said tab (112) of the corresponding side flank (110) of the end piece (100) in order to retain said locking blade (200) in the retracted position with the compression spring (300) in the compressed state and **in that** each retaining element (252) is elastically deformable under a pressing action in order to release said tooth (253) from its latching on the edge of said tab (112) and thus allow the elastic relaxation of the compression spring (300) driving said locking blade (200) towards its extended position.

2. A mounting device (10) according to claim 1, wherein each side flank (110) of the end piece (100) carries, projecting from its inner face (110B), two small walls (113, 114) extending lengthwise perpendicularly to said upper longitudinal edge (111A) and being spaced apart from each other in the longitudinal direction of said side flank (110) so that they form abutments against which said locking blade (200) bears respectively in its retracted and extended positions.

3. A mounting device (10) according to claim 2, wherein, in each side flank (110) of the end piece, the small wall (113) forming the abutment for said locking blade (200) in its retracted position extends along a front transverse edge (111C) opposite said rear transverse edge (111D) of said side flank (110).

4. A mounting device (10) according to one of claims 2 or 3, wherein each locking blade (200) comprises a central opening (240) in which said compression spring (300) is housed, one end (301) of which is connected to said locking blade (200), while the other end bears against said small wall (114) of the corresponding side flank (110) of the end piece (100), forming the abutment for the locking blade (200) in its extended position.

5. A mounting device (10) according to one of claims 1 to 4, wherein each locking blade (200) is in the form of a rigid plate with two parallel outer longitudinal edges (210) connected at the rear by a straight outer rear transverse edge piece (220) and at the front by a slanted outer front transverse edge piece (230) forming a nose (232) at the tip.

6. A mounting device (10) according to the preceding claim, wherein the outer front transverse edge piece (230) of each locking blade (200) is notched.

7. A mounting device (10) according to one of claims 5 or 6, wherein each locking blade (200) comprises a wide central opening (240) of generally rectangular shape so that it is in the form of a rigid frame.

8. A mounting device (10) according to any one of the preceding claims, wherein each retaining element is in the form of a flexible rod (252) provided with said tooth (253) located close to the free end of said flexible rod (253), the other end of which is connected to a rigid plate (255) connected to the corresponding locking blade (200).

9. A multi-appliance block (1) comprising a casing (2) of rectangular parallelepiped shape with two parallel longitudinal walls (20), **characterized in that** it comprises two mounting devices (10) according to any one of claims 1 to 8 equipping the two ends of the casing (2), the end piece (100) of each mounting device (10) being fixed to said casing (2) so that the two side flanks (110) of said end piece (100) cover a portion of the outer faces (20A) of the longitudinal walls (20) of said casing (2) and the end flank (120) of said end piece (100) closes a portion of an end opening of said casing (2), the outer faces (20A) of said longitudinal walls (20) of the casing (2) comprising outer longitudinal grooves (23A, 25a) into which the two locking blades (200) of each mounting device (10) are slid.

10. A multi-appliance block (1) according to claim 9, wherein the casing (2) comprises two end side walls (60) attached to the end flanks (120) of the end pieces (100) of said mounting devices (10) in order to completely close the two end openings of said casing (2).

11. A multi-appliance block (1) according to the preceding claim, wherein each end side wall (60) of the casing (2) is slid over corresponding sliding edges (121B) of the end flank (120) of the end piece (100) of the corresponding mounting device (10).

12. A multi-appliance block (1) according to one of claims 10 and 11, wherein each end side wall (60) of the casing (2) is snap-fastened into an opening (122A) provided in the end flank (120) of the end piece (100) of the corresponding mounting device (10).
